# EUROPEAN PATENT APPLICATION

(11) **EP 4 378 614 A1**
(43) Date of publication of application: **05.06.2024**
(21) Application number: 22210734.4
(22) Date of filing: 01.12.2022
(51) Int. Cl.: B23H 11/00, B23Q 3/155

(54) **A TOOL CHANGER FOR AN ELECTRICAL DISCHARGE MACHINE TOOL AND THE ELECTRICAL DISCHARGE MACHINE TOOL**

(71) Applicant: Agie Charmilles SA, 6616 Losone (CH)
(72) Inventor: PARIDE PEDRINI, Brian, 6616 Locarno (AT); TADÉ, Luca, 6500 Bellinzona (AT)
(74) Representative: Li Schrag, Yue

(57) **Abstract**

The present invention is a tool changer for electrical discharge machine tool (100), in particular for loading and unloading at least one tool electrode holder to be mounted in a chuck of the electrical discharge machine tool for machining a workpiece. The tool changer comprising:
a. a base (2) having a back wall (3c) and two side walls (3a, 3b), wherein on each side wall a linear guide is provided horizontally;
b. a holding plate (7) coupled to the linear guide to allow the displacement of the holding plate on a horizontal plane on the linear guide in its longitudinal direction defined as extending direction;
c. a plurality of forks (9) for receiving the tool electrode holder (41) mounted on the holding plate;
d. a driving unit connected to the holding plate to enable the movement of the holding plate between a retracted position and an extending position, wherein in the retracted position the holding plate is positioned closely to the back wall and in the extending position the holding plate is moved away from the back wall, wherein the driving unit includes a first actuator and a second actuator, the longitudinal axis of each actuator being arranged at a defined angle to the extending direction of the tool changer..

## Description

### FIELD OF THE INVENTION

The present invention is related a tool changer for an electrical discharge machine tool. In further, the present invention is related to an electrical discharge machine tool with the tool changer mounted thereon.

### BACKGROUND OF INVENTION

The electrical die-sinking machine tools are widely known for the production of molds, complex shaped cavities, and applications, which are very difficult to machine with conventional machining processes. Typically, several shaped electrodes for one part production are required to obtain the desired cavity and to accomplish the different machining steps for high surface quality. The die-sinking (DS) process is comparably slow. In order to enhance the production efficiency, automation plays a key role. Therefore, like many other types of machine tools, the electrical discharge machine tool is typically equipped with some automation devices, for unattended operation. One of such automation device is the tool changer, which enables the automatic change of the tool electrode.

There are many automatic tool changer in the art. Since the customers' requirements are very different, there are tool changers for managing few electrodes up to several hundreds of electrodes. If a large number of electrodes is required a separate robotic device is typically placed aside of one or more EDM machines. An intermediate number of electrodes, between e.g. 10 and 25 is sometimes managed by using rotary- or chain-type electrode changers. Low number of electrodes are sometimes managed by using stationary racks placed within the machining area, in which the head moves to the electrode changing position with no auxiliary movement by the tool changer. More typically, linear tool changers serve as a basic automation solution of DS-EDM machines. Some linear changers demand some space of the machining area. Some linear tool changer protrude to the outside of the machine tool. The common drawback of the known tool changer is that increased floor space is required at the installation place. The problem is that the space available inside the machine, in the machining area of the machine tool is very limited, in particular, where the linear tool changer must not protrude from the machine enclosure and use a minimum space within the machining area.

Therefore, it is difficult to mount such space-demanding tool changers in the machine tool, and in the same require a minimum space at the installation place.

Traditional linear tool changer such as the one shown in EP887148A have linear guides and a pneumatic cylinder parallel to the extension direction. If a high stroke is required, the size of the linear tool change must be increased and more space for installation must be available in the machine area.

### SUMMARY OF THE INVENTION

It is an objective of this invention to provide a tool changer for electrical discharge machine tool, which is compact. In particular, it is an objective to provide a tool changer for electrical discharge machine tool, which can be fully integrated in the machine tool. Moreover, it is an objective to provide a tool changer for electrical discharge machine tool, which can operate within the machining area of the machine tool.

According to the present invention, these objectives are achieved through the features of independent claims. In addition, further advantageous embodiments follow from the dependent claims and the description.

In the present invention, a tool changer for electrical discharge machine tool, in particular for loading and unloading at least one tool electrode holder to be mounted in the chuck of the electrical discharge machine tool for machining a workpiece is provided. The tool changer comprises a base, a holding plate, a plurality of forks for receiving the tool electrode holder mounted on the holding plate and a driving unit connected to the holding plate to move the holding plate to enable the movement of the holding plate between a retracted position and an extending position. Particularly, such movement is accomplished by a linear motion in the horizontal plane.

The base has a back wall and two sidewalls. On each sidewall, a linear guide is provided. In particular, the linear guides are arranged horizontally, and are connected with each other by means of the holding plate. In further, the holding plate has a front end and a rear end. The rear end is closer to the back wall of the base than the front end. The plurality of forks are attached or formed at the front end of the holding plate.

The holding plate is coupled to a mobile part of the linear guide to allow the displacement of the holding plate on a horizontal plane on the linear guide in its longitudinal direction defined as extending direction. Additionally, the holding plate can be moved between a retracted position and an extending position. In the retracted position, the holding plate is located closely to the back wall, and in the extending position, the holding plate is moved away from the back wall. This linear motion is achieved by means of a first- and a second actuator. The first actuator is a first cylinder having a first piston and the second actuator is a second cylinder with a second piston. A pneumatic cylinder is preferred for this application. However, a hydraulic cylinder or an electric linear actuator may be applied as well as the actuator. The longitudinal axis of each cylinder is arranged at a defined angle to the extending direction. This means that the longitudinal axis of the cylinder is not in parallel to the extending direction of the tool changer. This arrangement of the cylinders provides the advantage that the size of the tool changer in the extending direction can be minimized without compromising the stroke of the tool changer in this direction.

The first cylinder and the second cylinder may be arranged symmetrically with respect to the extending direction of the tool changer, in particular the angle between the first cylinder, respectively the second cylinder and the extending direction is in the range of 10 and 80 degrees. In a retracted position, the angle between the cylinder and the extension direction is e.g. 60°, whereas in the extended position said angle is e.g. 30°.

Preferably, the first and the second cylinder are intersecting (in a top view), that is arranged in a crossed manner, or in a V-manner (having a common fixing element), or, not intersecting at all. Typically, in case of intersecting cylinders and in case of a common fixing element, the first and the second cylinder are located on distinct planes.

Preferably, the extremity of each cylinder is rotatable mounted on the stationary part, e.g. the back wall of the base or an adjacent part, and the extremity of each piston is rotatable mounted on the mobile part, e.g. the holding plate or on an adjacent part.

One main challenge of design such tool changer is the limited space in the machine tool without increasing the size of the machine tool. Thus, the size of the tool changer in the extending direction must be very compact, so that the cabin can be closed around the machining area and behind the linear tool changer, and the overall size of the machine is not increased. The size of the conventional linear tool changer in the extending direction is determined by the longitudinal size of the actuator. In the present invention, the cylinder is placed in a way that its longitudinal direction is not in parallel to the extending direction of the tool changer but with a defined angle to it. Although the cylinder is not parallel to the extension direction of the tool changer, there is still a force component in the extending direction, where said force depends from said angle. By pairwise symmetrical mounting of the cylinders, e.g. in V-manner, the orthogonal force components substantially neutralize each other. In particular, by connecting the mobile parts of the two linear guides by means of the holding plate the resultant orthogonal force is zero. Compared with the conventional tool changer, this design needs less space in a rest position but still can provide sufficient stroke in the extending direction. By this way, the size of the tool changer in the extending direction is small compared with the stroke of the tool changer required for the changing operation. Thus, the present invention provides a compact tool changer, in particular a linear tool changer, which can be mounted in the proximity of the machining area of the machine tool. It can be fully integrated in the machine tool with minimum space in the extending direction, namely the direction towards the machining area. When the tool changer is mounted in the machine tool, the tool changer does not protrude from the periphery of the machine tool. In addition, the linear tool changer according to the invention is reliable and comparably cheap.

In order to further reduce the size of the tool changer in the extending direction and increase the stroke in the extending direction, a telescopic linear guide is applied. For example, two guiding slides are jointed in series in the longitudinal direction, by joining the respective carriage. The telescopic linear guide can have two or more stages. The telescopic linear guides (or telescopic slides) can partially for fully extended in the longitudinal direction. In this way, the stroke of the tool changer in the extending direction can be increased.

In a preferred variant, the cylinder is a telescopic cylinder. A piston is nested within a series of hollow stages to allow longer stroke.

In one variant, the back wall is longer than the sidewall to reduce the dimension of the tool changer in the extending direction and to increase the capacity of storing the tool electrode.

If no electrode has to be changed, the holding plate is rested at the retracted position. At this position, the holding plate is located closely to the back wall of the base. When an electrode must be changed, the holding plate is moved in the direction toward to the machining area along the extending direction. At this position, the holding plate is located apart away from the back wall of the base, but is placed in the machining area where it can be attained by the machining head of the machine tool for changing the tool electrode. For example, the electrode currently mounted on the machining head can be dismounted from the chuck and stored in one free position of the tool changer and/or another electrode stored in a fork of the tool changer can be mounted into the chuck. The machining is paused and the machining head is moved as required, in C, Z, Y and then X, to a prestored tool changing position in front of the free position of the tool changer. The tool changer moves from a retracted position to an extension position (X-direction), so that the fork engages with the current tool holder. Then, the chuck is opened, the machining head is lifted in Z-direction leaving the actual electrode holder in the fork, and the machining head is then moved in a Y-direction to another changing position. Here the machining head is lowered down in Z-direction to grasp the new electrode holder. The chuck is closed and the tool changer is retracted. Finally, the machining head is moved to a working position and the machining is restored.

In some embodiments, the base is a U-shaped frame. A first guide carriage and a second guide carriage are arranged on the inner surface of the two sidewalls of the base, and a first guiding rail and a second guiding rail are arranged on the outer surface of the sidewalls of the holding plate. Each guiding rail is coupled with one guide carriage for guiding the holding plate along the guiding rail. The retracted position is like an idle position, in which the holding plate is arranged almost fully within the U-shaped frame. In the extending position, the holding plate projects outwardly from the U-shaped frame in the horizontal plane. In a top view, the U-shaped frame defines at least partially exterior of the tool changer, in particular the exterior of three sides.

Moreover, the base is made of rigid material to carry the weights of the multiple tool electrodes, the holding plate and the driving unit. In some embodiments, the base of the tool changer is mounted on a frame-base by means of legs. The frame-base is also used to support the machine base. Preferably, the base of the tool changer is mounted on the machine base or on the frame-base, outside of the work tank and inside the machine enclosure. This means that the lower section of the base and/or the legs are comparably slim.

The cylinder can be fixed with one end on the back wall of the base, for instance at the inner surface thereof. The piston is received in the cylinder and is driven pneumatically for reciprocating movement. Since one end of the piston is connected to the holding plate, the piston can push the holding plate from the retracted position to the extending position and pull the holding plate back from the extending position to the retracted position.

In particular, the one end of the cylinder is connected to the base through a first fixing element, e.g. a pin directed in the vertical direction, on which the end of the cylinder is pivoted. The end of the cylinder has a bearing, which is fitted on said pin shaped first fixing element. Thus, during the movement of the cylinder, the end of the cylinder is pivotable about the axial axis of the first fixing element.

Additionally, the end of the piston has a bearing by which it is pivoted on a second fixing element, which is mounted on holding plate. The second fixing element is attached on the top surface of the holding plate and projects out of the top surface such that the cylinder does not directly sliding on the top surface of the plate. Thus, during the movement of the cylinder, the one end of the piston is pivotable about the axial axis of the second fixing element directed in the vertical direction.

In order to assemble the tool changer in the machine tool in a simple manner, a supporting element is fixedly mounted on the bottom surface of the base. In particular, the supporting element and the base are formed in one piece.

In one variant, the supporting element has an elongated body extending in the vertical direction, in particular, the supporting element includes two legs, which are mounted to a frame-base. The frame-base forms a base for the machine body and other modules of the electrical discharge machine, such as the dielectric unit.

The entire tool changer with the supporting element may be provided as a pre-assembly to be mounted in the machine tool.

According to another aspect, the present invention is related to a machine tool for electrical discharge machining comprising a machine body, a machine enclosure with a vertically sliding door, a work tank with a side wall, wherein the base of the tool changer is mounted on the machine body or on a frame-base bearing, and that said base is located between the side wall of the work tank and the vertically sliding door.

The invention deals with a linear tool changer, which is mounted, at the base of the electric discharge machine.

### BRIEF DESCRIPTION OF THE DRAWINGS

In the following, a more particular description of the present invention is further described. The embodiments are described and explained with details with reference to accompanying drawings in which illustrate:
- Fig.1a, b: a top view of a tool changer in a retracted-, respectively an extended position ;
- Fig. 2: a partial sectional side view of the tool changer in an extended position;
- Fig. 3 & 4: perspective views of the tool changer in a retracted position;
- Fig. 5: a front view of an electrical discharge machine with the tool changer installed therein in the extended position;
- Fig. 6a,b: an electrical discharge machine tool with the tool changer;

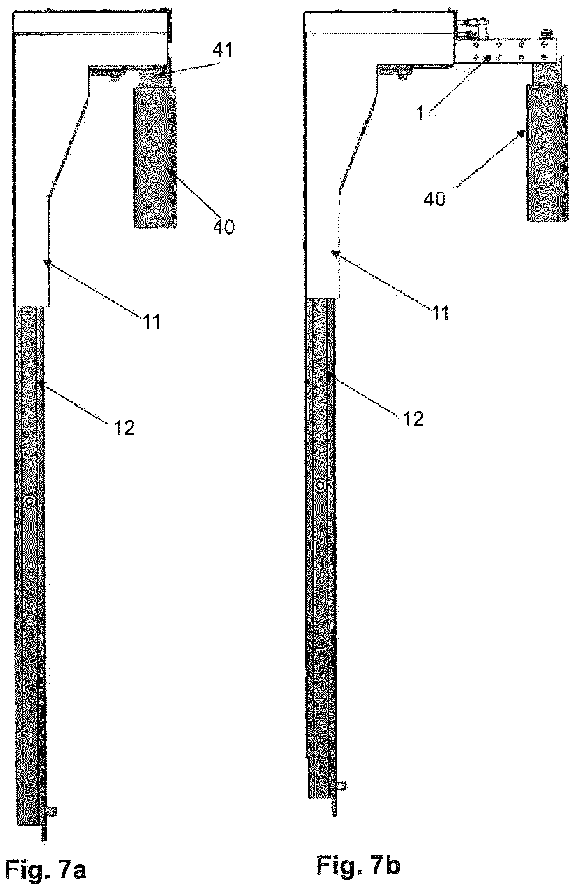

- Fig. 7a, b: a linear tool changer including supporting elements, in both, a retracted and an extended position.

### EXEMPLARY EMBODIMENTS

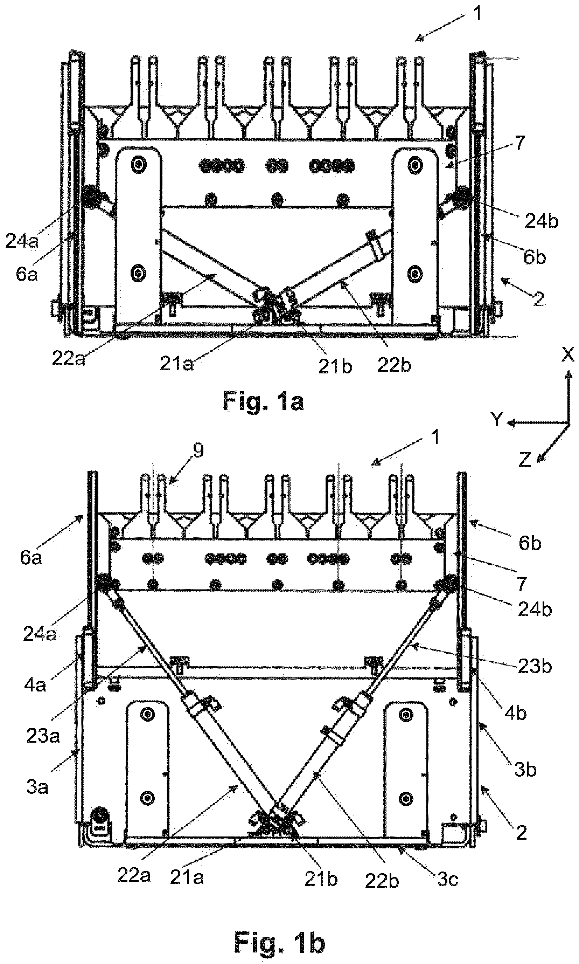

Figures 1a and 1b illustrate a top view of a tool changer 1 in a retracted position and in an extended position, respectively. The cover 5 of the tool changer is omitted to illustrate the system. As depicted in figures 1a and 1b, the tool changer comprises a base 2, which is a U-shaped frame. The base consists of two sidewalls 3a, 3b arranged in parallel and a back wall 3c. On the opposite of the back wall, the open end of the U-shape extends towards the machining area. The sidewalls and the back wall are rectangular plates. In the embodiment shown in figures 1a and 1b, the back wall is longer than the sidewall. However, in another embodiment, the sidewall is longer than the back wall.

In further, the tool changer includes a holding plate 7 for mounting a plurality of forks 9 thereon. Each fork can receive and hold an electrode holder 41 with an electrode 40. The fork may be an elastic fork, or may include other means to retain the electrode holder 41. The holding plate is a rigid element, since it must carry all the weight of the plurality of electrodes. The holding plate has a rectangular shape and is provided with the plurality of forks at one end faced to the machining area when the tool changer is mounted in the machine tool. The holding plate is moveably accommodated between the sidewalls of the base. A first guiding rail 6a and a second guiding rail 6b are mounted on the two opposite ends of the holding plate 7. The first guiding rail and the second guiding rail run in parallel and are spaced apart with each other. A first guide carriage is fixed on the inner surface of one sidewall of the base. A second guide carriage is fixed on the inner surface of the other sidewall. The two guide carriages are operationally connected to the two guiding rails to allow the holding plate to move between a retracted position and an extended position and vice-versa. In the retracted position, the holding plate is rested in the base. In the extended position, the holding plate is extended toward the open end of the base. In particular, the holding plate is moveable in the horizontal plane, namely the X-Y plane shown in figure 1b and in the direction parallel to the sidewalls of the base, namely in the Y-direction.

The tool changer further comprise a driving unit to enable the displacement of the holding plate with the forks thereon between the retracted position and the extended position. The driving unit comprises a first actuator unit and a second actuator unit. They are configured to be operated synchronized. Each actuator unit is provided with a cylinder 22a, 22b having a piston 23a, 23b therein. When the piston is retracted into the cylinder, the holding plate is moved to the retracted position. When the piston is extended out of the cylinder, the holding plate is moved to the extended position. Especially, the both cylinder are arranged oblique to the moving direction of the holding plate. Moreover, the first cylinder unit and the second cylinder unit are arranged in a symmetrically manner, in particular in the horizontal plane. One end of the first cylinder is pivotally arranged on a first fixing element 21a mounted on the back wall of the base. The opposite end of the first cylinder has an opening to receive the first piston 23a. The first piston has two ends. The first end is moveably positioned in the first cylinder and the second end can be extended out of the cylinder. The second end of the first piston is pivotally arranged on a third fixing element 24a, which is fixed on the holding plate. One end of the second cylinder 22b is pivotally arranged on a second fixing element 21b mounted on the back wall of the base on the base plate. The opposite end of the second cylinder has an opening to receive the second piston. The second piston has two ends. The first end is moveably positioned in the second cylinder and the second end can be extended out of the second cylinder. The second end of the second piston is pivotally arranged on a fourth fixing element 24b, which is fixed on the holding plate. The fixing elements 21a, 21b, 24a and 24b each comprise a pin, which is directed in the vertical direction (Z). Said pin cooperates with a bearing, which is provided at the end of the cylinders and the piston. As shown in figure 1a and 1b, the first fixing element 21a and the second fixing element 21b may coincide, however this is not mandatory.

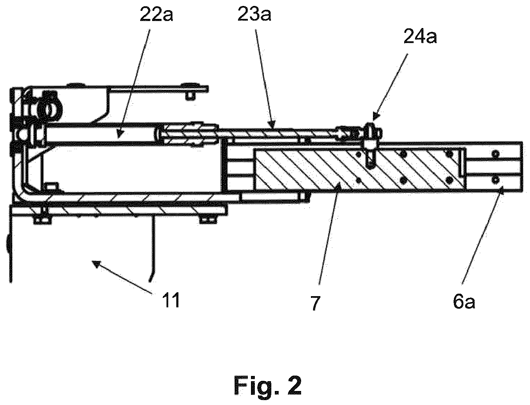

Figure 2 shows a partial sectional side view of the tool changer in an extended position. The fixing element 24a is mounted on the holding plate 7. The bearing section at the end of the piston 23a is coupled with the pin of the fixing element 24a.

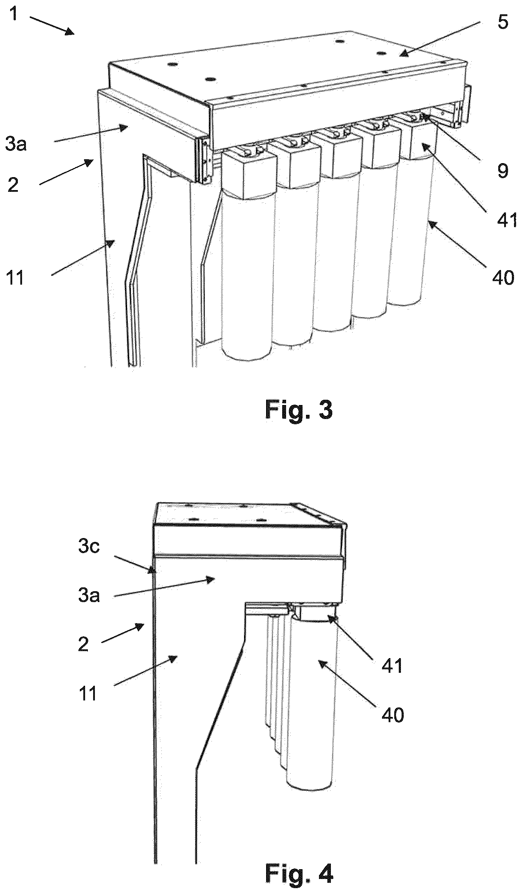

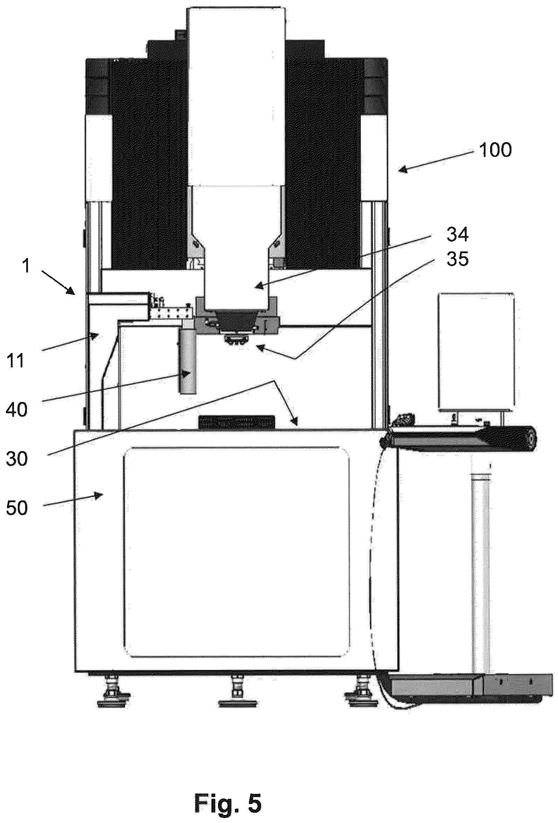

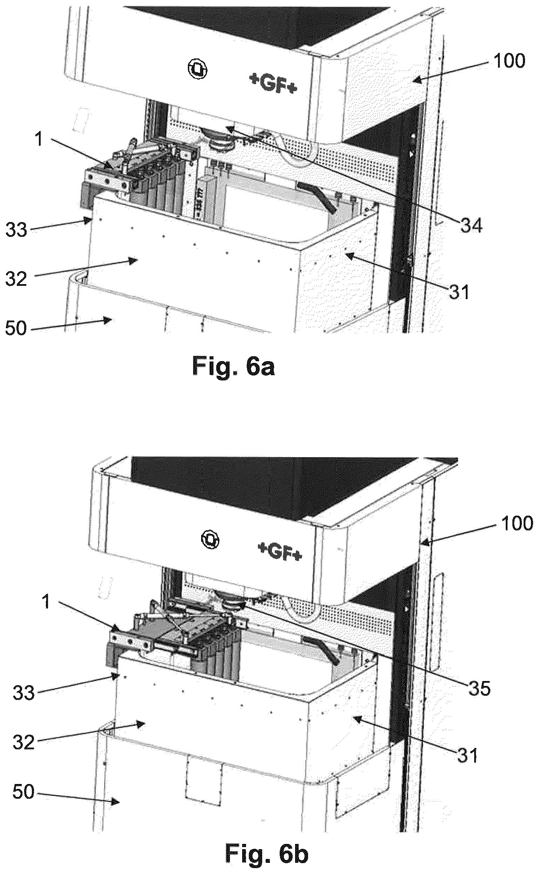

Figures 3 and 4 depict the three-dimensional view of the tool changer with a supporting element. The figure 3 shows an isometric projection and the figure 4 shows the tool changer from the side. In both figures, a plurality of electrode holders 41 are received in the forks 9. In order to mount the tool changer in the machine tool, a supporting element 11 is arranged under the base 2. Figures 3 and 4 show the embodiment, in which the supporting element is connected to the bottom surface of the sidewalls 3a, 3b of the base. Figures 5, 6a and 6b illustrate a die-sinking electrical discharge machine tool with the tool changer. The machine tool comprises a stationary machine table 30 mounted on the machine base and a work tank 31, in particular a 3-sides open automatic work tank around the machine table. The machining head is displaceable in the horizontal directions, X and Y, and in the vertical direction Z. Typically, a C-axis is integrated in the machining head 34, and a chuck 35 for clamping a tool electrode holder is mounted at the bottom of said C-axis. In this way, the electrode can be positioned at an angle or can rotate during the machining. The work tank receives the dielectric liquid required for the electrical discharging machining process. On the machine table 30, a fixing means is provided to clamp a work piece or a pallet thereon.

As clearly shown in figure 5, the rear side of the base 2 does not protrude from the machine enclosure, so that the automatic door 50 can be lifted and lowered alongside of the machine body, unhindered. The space required at the place of installation is not increased by the tool changer. Moreover, the space occupied by the tool changer within the machining area is very limited and is determined substantially by the electrodes. The electrodes are suspended within the work tank, so that in any position of the tool changer the electrodes do not collide with the sidewall 33 of the work tank.

In certain embodiments, the machine base and other modules of the electrical discharge machine such as electrical cabinet, dielectric unit, wire collection box, etc. are mounted on a frame-base (not shown), which serves as a common base for entire equipment. The tool changer is arranged on the machine base or directly to said frame-base, by means of the legs 12 shown in Figures 6a and 6b.

Alternatively, it is possible to arrange the tool changer on the machine table, or on the machine body, in the region of the back wall of the working area.

The tool changer according to the invention is particularly suitable for the automatic tool changing of e.g. 3 to 10, typically 4 to 6 electrode holders. It can be mounted at the left side, at the right side, or at both sides of the working area.

### LIST OF REFERENCES

- 1: tool changer
- 2: base
- 3a, 3b: side wall of the base
- 3c: back wall of the base
- 4a, 4b: first guide carriage, second guide carriage
- 5: cover
- 6a, 6b: first guiding rail, second guiding rail
- 7: holding plate
- 9: fork
- 11: supporting element
- 12: leg
- 21a, 21b: a first fixing element, a second fixing element
- 22a, 22b: a first cylinder, a second cylinder
- 23a, 23b: a first piston, a second piston
- 24a, 24b: a third fixing element, a fourth fixing element
- 25a, 25b: a first hinge, a second hinge
- 26a, 26b: a third hinge, a fourth hinge
- 30: machine table
- 31: work tank
- 32: front wall of work tank
- 33: side wall of work tank
- 34: machining head, or quill
- 35: chuck
- 40: electrode
- 41: electrode holder
- 50: automatic door
- 100: machine tool

## Claims

1. A tool changer for electrical discharge machine tool (100), in particular for loading and unloading at least one tool electrode holder to be mounted in a chuck of the electrical discharge machine tool for machining a workpiece, the tool changer comprising:
a. a base (2) having a back wall (3c) and two side walls (3a, 3b), wherein on each side wall a linear guide is provided horizontally;
b. a holding plate (7) coupled to the linear guide to allow the displacement of the holding plate on a horizontal plane on the linear guide in its longitudinal direction defined as extending direction;
c. a plurality of forks (9) for receiving the tool electrode holder (41) mounted on the holding plate;
d. a driving unit connected to the holding plate to enable the movement of the holding plate between a retracted position and an extending position, wherein in the retracted position the holding plate is positioned closely to the back wall and in the extending position the holding plate is moved away from the back wall, wherein the driving unit includes a first actuator and a second actuator, the longitudinal axis of each actuator being arranged at a defined angle to the extending direction of the tool changer.

2. The tool changer according to claim 1, wherein the first actuator is a first cylinder (22a) with a first piston, and the second actuator is a second cylinder (22b) with a second piston.

3. The tool changer according to one of claims 1 or 2, wherein the first cylinder and the second cylinder are arranged symmetrically with respect to the extending direction of the tool changer.

4. The tool changer according to one of claim 1 to 3, wherein the angle between the first cylinder and the extending direction, respectively the second cylinder and the extending direction is in the range of 10 and 80 degree.

5. The tool changer according to one of claims 1 to 4, wherein the first cylinder and the second cylinder are arranged
a. in a crossed manner, or
b. in a V-manner, having a common fixing element.

6. The tool changer according to one of the claims 1 to 5, wherein the base (2) is a U-shaped frame, wherein a first guide carriage (4a) and a second guide carriage (4b) are arranged on the inner surface of the two side walls of the base in parallel, and a first guiding rail (6a) and a second guiding rail (6b) are arranged on the outer surface of the side walls of the holding plate (7), wherein each of the guiding rail is coupled with one guide carriage for guiding the holding plate along the guiding rail.

7. The tool changer according to one of the claims 1 to 6, wherein linear guide is a telescopic linear guide.

8. The tool changer according to one of the claims 1 to 7, wherein the cylinder is a telescopic cylinder.

9. The tool changer according to one of claims 2 to 8, wherein one end of the cylinder is mounted on the back wall of the base and one end of the piston is connected to the holding plate.

10. The tool changer according to one of claims 2 to 9, wherein the one end of the cylinder is pivoted on a fixing element, which is fixed mounted on the back wall of the base, in particular, the one end of the cylinder is pivoted about a rotation axis in the vertical direction (z-direction).

11. The tool changer according to one of claims 2 to 10, wherein the piston is pivoted on a fixing element, which is fixed mounted on holding plate, in particular, the one end of the piston is pivoted about a rotation axis in the vertical direction (z-direction).

12. The tool changer according one of claims 2 to 11, wherein the cylinder is pneumatically or hydraulic or electrically driven.

13. The tool changer according to one of claims 1 to 12, wherein a supporting element (11) is fixedly mounted on the bottom surface of the base (2), in particular, the supporting element and the base are formed in one piece.

14. The tool changer according to claim 13, wherein the supporting element has an elongated body extending in the vertical direction, in particular the supporting element includes two legs (12) by which the tool changer is mounted to a frame-base.

15. A machine tool (100) for electrical discharge machining comprising a machine body, a machine enclosure with a vertically sliding door, a work tank with a side wall, wherein the base of the tool changer is mounted on the machine body or on a frame-base bearing, and that said base is located between the side wall of the work tank and the vertically sliding door.
